# EUROPÄISCHE PATENTANMELDUNG

(11) **EP 1 237 126 A2**
(43) Veröffentlichungstag der Anmeldung: **04.09.2002**
(21) Anmeldenummer: 01128285.2
(22) Anmeldetag: 29.11.2001
(51) Int. Cl.: G07D 5/04

(54) **Waageartige Vorrichtung zur Prüfung von Geldrollen**

(30) Priorität: 23.02.2001 DE 10108678
(71) Anmelder: Winter, Lieselotte, 69234 Dielheim (DE)
(72) Erfinder: Winter, Lieselotte, 69234 Dielheim (DE)
(74) Vertreter: Kammer, Arno, Dipl.-Ing.

(57) **Zusammenfassung**

Es wird eine waageartige Vorrichtung zur Prüfung von Geldrollen beschrieben, bei der der eine Arm des Waagebalkens eine Aufnahmemulde für die Münzrolle und der andere Arm ein Gegengewicht aufweist. Dieses ist auf Punkte mit unterschiedlichen Entfernungen von der Lagerung des Balkens einstellbar.

Um die Vorrichtung für die neue europäische Währung einsetzbar zu machen, werden die unterschiedlichen Entfernungen von der Lagerung derart groß gewählt, dass der kleinste Abstand zwischen zwei einander benachbarter Punkte ausreichend groß ist.

## Beschreibung

Die Erfindung betrifft eine waageartige Vorrichtung zur Prüfung von Geldrollen mit den Merkmalen des Oberbegriffs des Anspruchs 1.

Eine derartige Vorrichtung z. B. ist aus der Gebrauchsmusterschrift 1 819 202 bekannt. Dort ist der Waagebalken selbst also ohne Geldrolle und Gegengewicht in seinem Schwerpunkt gelagert und kann mit einer Justierschraube exakt in die Sollstellung, nämlich Waagebalken liegt waagrecht, gestellt werden.

Will man eine derartige Vorrichtung für die neue europäische Währung auslegen, indem man, ähnlich wie beim Stand der Technik, in den notwendigen Abständen Rastungen für das Gegengewicht anbringen will, so ergeben sich dadurch Schwierigkeiten, dass die Rastungen für die Geldrolle 1 Euro und für die Geldrolle 5 Cent so nahe beieinander liegen würden, dass sie nahezu ineinander übergehen. Eine mögliche Lösung dieses Problems wäre die Anwendung von zwei unterschiedlichen Gewichten, was jedoch die Vorrichtung kompliziert.

Der Erfindung liegt die Aufgabe zugrunde, die Vorrichtung insbesondere für die Euro-Währung unter Beibehaltung nur eines Gegengewichts anwendbar zu machen.

Diese Aufgabe wird durch die Merkmale des Anspruch 1 gelöst.

Die Unteransprüche beinhalten vorteilhafte Ausgestaltungen der Vorrichtung.

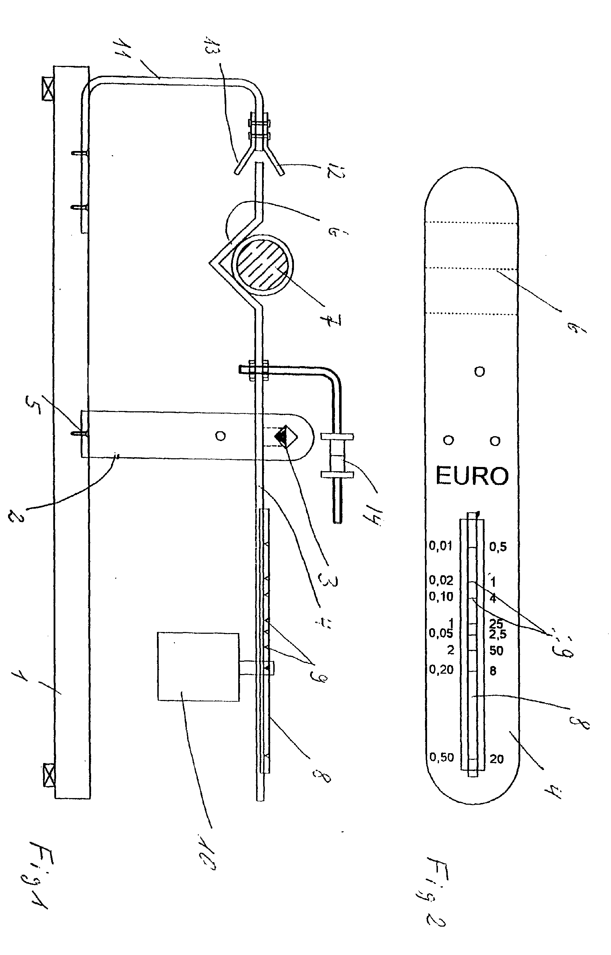

Die Fig. 1 der Zeichnung zeigt ein Ausführungsbeispiel der erfindungsgemäßen Vorrichtung. In Fig. 2 ist ein Draufblick auf den Waagebalken gezeigt. In Fig. 1 ist auf einer Grundplatte 1 ein Träger 2 für die Lagerung 3 eines Waagebalkens 4 gezeigt. Der Träger 2 ist mit der Grundplatte 1 mittels Schrauben 5 verschraubt. Zur Erhöhung der Stabilität des Trägers 2 sind dessen Fuß oder Füße in eine passende Aussparung in der Grundplatte 1 eingesetzt.

Der Waagebalken 4 weist auf der linken Seite eine quer zum Waagebalken liegende Mulde 6 auf, in die die Geldrolle 7 eingelegt ist. Auf der rechten Seite trägt der Waagebalken eine Einhängeschiene 8, die Rastungen 9 aufweist, in die ein Gegengewicht 10 einhängbar ist und von Rastung zu Rastung verschoben werden kann.

Die Fig. 2 zeigt einen Aufblick auf den Waagebalken 4 mit der Mulde 6 links und der Einhängeschiene 8 und deren Rastungen 9 rechts. Neben die Rastungen 9 sind links die einzelnen Münzwerte in Euro aufgeschrieben und rechts der Wert der ganzen Münzrolle.

Wie Fig. 1 zeigt, ist die Einhängeschiene 8 zur exakten Festlegung in die Waagebalken eingelassen und dort befestigt.

An der Grundplatte 1 ist auch der Träger 11 für einen oberen Anschlag 12 und einen unteren Anschlag 13 für den Waagebalken 4 befestigt. Außerdem ist auf dem Waagebalken 4 ein Justiergewicht 14 befestigt, mit dem der Waagebalken 4 unter vorgegebenen Belastungen der beiden Balkenteile in die Waagrechte gebracht werden kann.

Gegenüber der bekannten Anordnung sind bei dem Ausführungsbeispiel der Fig. 1 der Schwerpunkt des Waagebalkens 4 selbst nach rechts verschoben und die Abstände der Rastungen 9 von der Lagerung 3 bei gleichbleibendem Abstand der Mulde 6 von der Lagerung deutlich größer gewählt, wodurch die Abstände benachbarter Rastungen 9 von einander größer werden und damit die Rastungen 9 für die Münzrolle 1 Euro und 0,05 Euro für die Handhabung ausreichend auseinander rücken. Das Gegengewicht muss natürlich entsprechend verkleinert werden, da ja im Gleichgewichtsfall Gewicht mal Hebelarm auf beiden Seiten des Waagebalkens 4 gleich sein muss. Es ist hierbei gleichgültig, ob der Schwerpunkt des Waagebalkens 4 unterhalb der Lagerung liegt oder nach rechts verschoben ist. Dies muss dann beim Gewicht berücksichtigt werden.

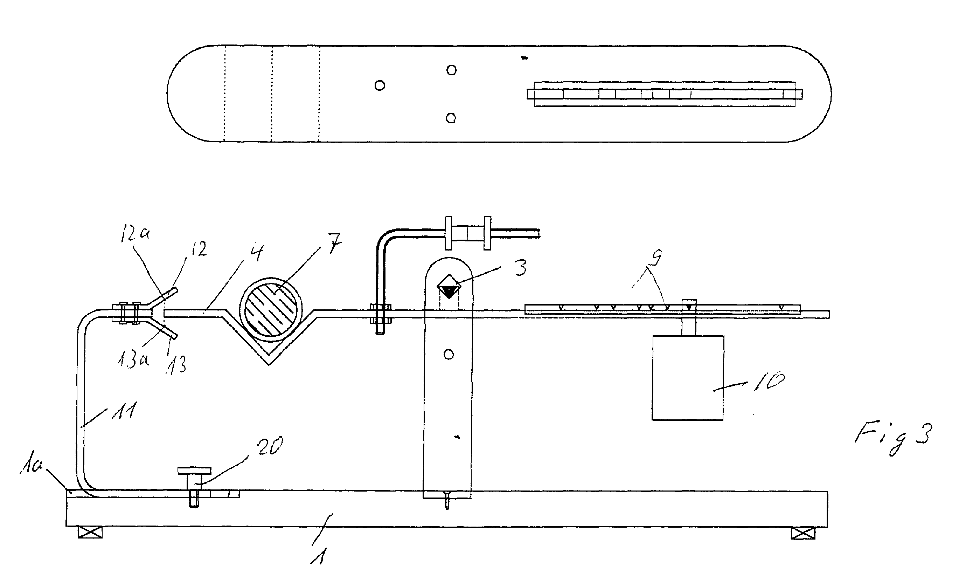

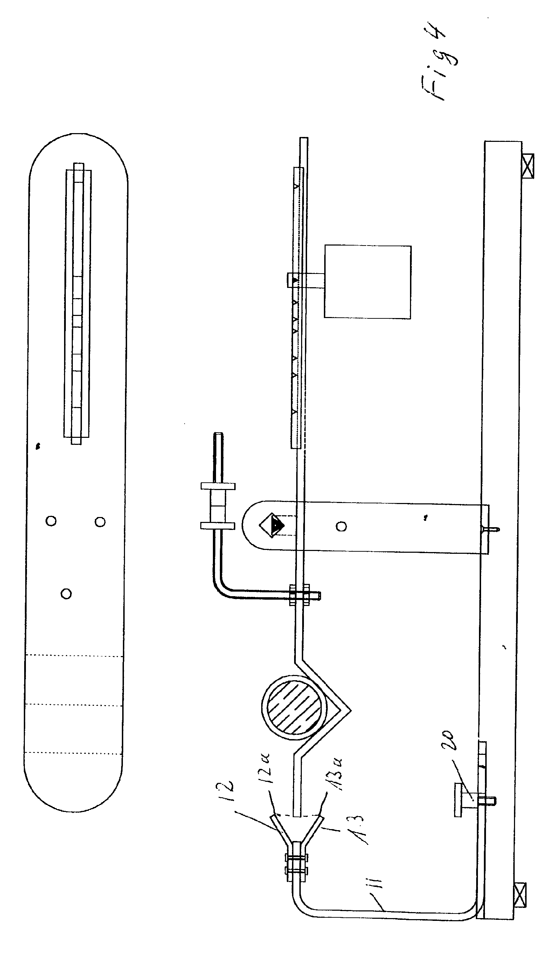

In Fig. 1 ist der Träger 11 für die Anschläge 12 und 13 starr mit der Grundplatte 1 verbunden. In Fig. 3, die sonst völlig der Fig. 1 entspricht, ist dieser Träger 11 in Richtung der Längsachse des Waagebalkens 4 verschiebbar, was durch ein nicht sichtbares Langloch im abgebogenen, unteren Teil des Trägers 11 und durch die lösbare Rändelschraube 20 ermöglicht wird. In Fig. 3 ist der Träger 11 in der Aussparung 1a der Grundplatte nach rechts verschoben. Damit ist die Öffnungsweite der Anschlagpunkte 12a und 13a des Waagebalkens 4 an den Anschlägen 12 und 13 relativ klein. In Fig. 4 ist dagegen der Träger nach links verschoben. Dadurch ist die Öffnungsweite der Anschlagpunkte 12a und 13a größer.

Diese Weiterbildung der Erfindung ist deshalb vorgesehen, weil sich herausgestellt hat, dass die Münzen Gewichtstoleranzen aufweisen, die sich zu beträchtlichen Unterschieden des Gewichts der einzelnen Münzrollen gleicher Münzen zueinander, addieren können. Um nun feststellen zu können, ob sich in der einzelnen Münzrolle eine Münze zuviel oder eine zuwenig befindet, wird nun den Münzrollen einer Münzart eine solche Öffnungsweite zugeordnet, dass es bei exakt abgezählter Münzzahl pro Münzrolle wegen der Toleranzen des Münzgewichts auch bei der maximal möglichen Abweichung nicht zum Anschlagen des Waagebalkens an den Anschlägen 12 oder 13 kommen kann. Bei Abweichen der Münzzahl schlägt dagegen der Waagebalken 4 an. Da bei verschiedenen Münzsorten (1 Euro, 2 Euro, 0,1 Euro, usw.) die möglichen maximalen Gewichtsunterschiede der Münzrollen wegen der Toleranzen der Münzgewichte unterschiedlich sind, kommt man nicht mit einer Öffnungsweite aus, sondern sieht mehrere, z. B. zwei Öffnungsweiten der Anschlagpunkte des Waagebalkens 4 vor, weshalb der Träger 11 in entsprechende Stellungen verschoben werden kann. Trotz der Toleranzen der Münzgewichte ist somit klar erkennbar, ob die Münzrollen die richtige Münzzahl aufweisen.

Bei dem Ausführungsbeispiel der Fig. 3und Fig. 4 verlaufen die Anschläge schräg, so dass sie eine schnabelartige Form aufweisen. Die Erfindung ist auch durch eine gestufte Ausbildung der Anschläge lösbar.

Bei der Fig. 1 bis 4 ist unterstellt, dass die Anschläge 12, 13 an einem Träger 11 vorgesehen sind. Die Erfindung ist aber auch anwendbar, wenn die Anschläge am Waagebalken 4 angebracht sind und der Träger eine Zunge trägt. In diesem Fall schlagen die mit dem Waagebalken beweglichen Anschläge an der feststehenden Zunge an.

Man muss nicht den Träger 11 und mit ihm die Anschläge 12, 13 verschieben. Es ist auch möglich die Anschläge selbst bei feststehendem Träger verschieblich zu machen.

## Patentansprüche

1. Waageartige Vorrichtung zum Prüfen von Geldrollen (7) auf ihren Sollinhalt, bei der ein Waagebalken (4) an seinem einen Arm eine Aufnahmemulde (6) für eine Geldrolle (7) und an seinem anderen Arm ein Gegengewicht (10) aufweist, das entsprechend der zu prüfenden Geldsorte auf Punkte mit unterschiedlichen Entfernungen (Rastungen 9) von der Lagerung (3) des Waagebalkens (4) einstellbar ist, **dadurch gekennzeichnet, dass** insbesondere für seine Anwendung bei den Münzen der europäischen Währung die Punkte mit unterschiedlichen Entfernungen (Rastungen 9) von der Lagerung (3) des Waagebalkens (4) derart groß gewählt sind, dass der kleinste Abstand zwischen zwei einander benachbarten Punkten (Rastungen 9) für die Einstellung des Gegengewichts (10) auf diese Punkte (Rastungen) ausreichend groß ist und dass das Gegengewicht (10) entsprechend kleiner gewählt ist.

2. Vorrichtung nach Anspruch 1, **dadurch gekennzeichnet, dass** den vorgegebenen Abständen (Rastungen 9) eine Skala mit Münzwerten zugeordnet ist.

3. Vorrichtung nach Anspruch 1 oder 2, bei dem der Träger (2) der Lagerung des Waagebalkens (4) auf einer Grundplatte (1) befestigt, insbesondere angeschraubt ist, **dadurch gekennzeichnet, dass** der Träger (2) in eine passende Aussparung in der Grundplatte (1) eingesetzt ist und dort befestigt ist.

4. Vorrichtung nach einem der Ansprüche 1 bis 3, **dadurch gekennzeichnet, dass** eine Einhängeschiene (8) für das Gegengewicht (10) vorgesehen ist und dass diese in eine passende Aussparung des Waagebalkens (4) eingesetzt und dort befestigt ist.

5. Vorrichtung nach einem der Ansprüche 1 bis 4, **dadurch gekennzeichnet, dass** am Waagebalken (4) ein Justiergewicht (14) angeordnet ist.

6. Vorrichtung nach einem der Ansprüche 1 bis 5, **dadurch gekennzeichnet, dass** der Schwerpunkt des Waagebalkens (4) gegenüber der Lagerung (3) in Richtung des Gegengewichts (10) verschoben ist.

7. Vorrichtung nach einem der Ansprüche 1 bis 6, **dadurch gekennzeichnet, dass** oberhalb und unterhalb eines Endes des Waagebalken (4) an einem Träger (11) je ein Anschlag (12, 13) angebracht ist, dass die Abstände der Anschlagstellen (12a, 13a) des Waagebalkens (4) an diesen Anschlägen (12, 13) oberhalb, bzw. unterhalb seiner Gleichgewichtslage derart gewählt sind, dass ein Anschlagen des Waagebalkens (4) an den Anschlägen (12, 13) nur bei einer fehlenden, bzw. einer zusätzlichen Münze zustande kommt.

8. Vorrichtung nach einem der Ansprüche 1 bis 6, **dadurch gekennzeichnet, dass** am einen Ende des Waagebalkens und zwar ober-, bzw. unterhalb je ein Anschlag angebracht ist, dass dem Ende des Waagebalkens eine fest angeordnete Zunge gegenübersteht, dass die Abstände der Anschlagstellen der Zunge an diesen Anschlägen des Waagebalkens derart gewählt sind, dass ein Anschlagen des Waagebalkens an den Anschlägen nur bei einer fehlenden, bzw. einer zusätzlichen Münze zustande kommt.

9. Vorrichtung nach einem der Ansprüche 7 oder 8, **dadurch gekennzeichnet, dass** die Anschläge (12, 13) in Richtung des Verlaufs des Waagebalkens (4) verschiebbar angeordnet sind, dass die Anschläge (12, 13) derart ausgebildet sind, dass sich die Abstände der Anschlagstellen (12a, 13a) durch die Verschiebung ändern und dass unterschiedlichen Geldrollen (7) unterschiedlichen Punkten des Verschiebebereichs zugeordnet sind.

10. Vorrichtung nach Anspruch 9, **dadurch gekennzeichnet, dass** die Anschläge (12, 13) schnabelartig ausgebildet sind.

11. Vorrichtung nach Anspruch 9, **dadurch gekennzeichnet, dass** die Anschläge Stufen aufweisen.
